# EUROPÄISCHE PATENTSCHRIFT

(11) **EP 3 571 968 B1**
(45) Veröffentlichungstag und Bekanntmachung des Hinweises auf die Patenterteilung: **02.08.2023**
(21) Anmeldenummer: 19000222.0
(22) Anmeldetag: 08.05.2019
(51) Int. Cl.: A47J 47/14

(54) **TRANSPORTBOXSYSTEM MIT WENIGSTENS EINER TRANSPORTBOX INSBESONDERE FÜR TEILZUBEREITETE SPEISEN UND LEBENSMITTEL UND MIT WENIGSTENS EINEM TRANSPORTBOXEINSATZ**
TRANSPORT BOX SYSTEM WITH AT LEAST ONE TRANSPORT BOX, PARTICULARLY FOR PARTIALLY PREPARED FOOD AND WITH AT LEAST ONE TRANSPORT BOX INSERT
SYSTÈME DE BOXES DE TRANSPORT DOTÉ D'AU MOINS UN BOXE DE TRANSPORT, EN PARTICULIER POUR ALIMENTAIRES PARTIALEMENT PRÉPARÉS ET D'AU MOINS UN INSERT DE BOXE DE TRANSPORT

(30) Priorität: 25.05.2018 DE 102018004214
(43) Veröffentlichungstag der Anmeldung: 27.11.2019
(73) Patentinhaber: MChef GmbH & Co. KG, 33602 Bielefeld (DE)
(72) Erfinder: Eilerts, Martin, 32584 Löhne (DE)
(74) Vertreter: Ellerbrächter, Dirk

(56) Entgegenhaltungen:
- DE-A1- 4 207 878
- DE-U1- 29 719 371
- US-A- 6 039 202

## Beschreibung

Transportboxsystem umfassend wenigstens eine Transportbox , insbesondere für teilzubereitete Speisen und Lebensmittel, und wenigstens einen Transportboxeinsatz , wobei die Transportbox wenigstens einen durch Seitenwandungen und wenigstens einen Boden begrenzten und durch wenigstens einen Deckel verschließbaren Aufnahmeraum umfasst, wobei der Transportboxeinsatz in den Aufnahmeraum einsetzbar ist, zum Positionieren von Geschirreinheiten und insbesondere von Tellern ausgebildet ist und wenigstens zwei Halteelemente umfasst, die jeweils wenigstens einen Aufnahmeabschnitt mit Aufnahmevertiefungen für wenigstens einen Randabschnitt der Geschirreinheiten und jeweils wenigstens einen Einsatzabschnitt zum Anordnen an wenigstens einer Seitenwandung des Aufnahmeraums aufweisen, wobei in dem Aufnahmeraum Geschirreinheiten entweder leer oder mit darauf befindlichen Speisen und Lebensmitteln, die sich insbesondere in einer Umverpackung befinden, gelagert sind, und wobei die Geschirreinheiten mit darauf befindlichen Speisen und Lebensmitteln, die sich insbesondere in einer Umverpackung befinden, waagerecht gelagert sind.

Im Stand der Technik sind verschiedene Transportboxen bekannt geworden, die die Kühlung von zu transportierenden Lebensmitteln ermöglichen. Häufig wird in solchen Transportboxen Trockeneis eingesetzt, um die Lebensmittel während des Transports zu kühlen und z. B. auf Temperaturen unterhalb des Gefrierpunkts von Wasser halten zu können. Derartige Transportboxen werden oft mit Transportboxeinsätzen verwendet, damit die Lebensmittel oder Getränkeflaschen während des Transports im Aufnahmeraum nicht umstürzen können bzw. sicheren Halt haben.

Solche Transportboxen können dazu verwendet werden, hochwertige teilzubereitete Speisen und Lebensmittel sicher und zuverlässig gekühlt zu transportieren. Dazu sind die Speisen in der Regel auf ebenfalls hochwertigen Geschirreinheiten angeordnet. Die Logistik für den Hin- und Rücktransport der Komponenten ist allerdings oft sehr aufwendig und weist daher einen Verbesserungsbedarf auf.

Aus dem DE 297 19 371 U1 ist ein Isolierbehälter zur Aufbewahrung und zum Transport von Gastronormbehältern bekannt. Dort sind zwei gegenüberliegende Wände als austauschbare Einschubplatten gestaltet, die Führungsstege zur Aufnahme der Behälter besitzen.

Die DE 42 07 878 A1 zeigt einen tragbaren Behälter zum Aufbewahren und Transportieren von Gegenständen. In den Behälter können Raumteilerplatten mit Führungen zur Bildung von Fachanordnungen eingesetzt werden. Dabei können die Fachanordnungen sowohl waagerecht als auch senkrecht orientiert sein.

Ein in der US 6 939 202 A beschriebenes Kühlsystem besitzt eine Rahmenstruktur, in die einzelne Einschübe eingesetzt werden können, dadurch entstehen Fächer, in denen Getränkebehälter oder Schalen gelagert werden können.

Es ist deshalb die Aufgabe der vorliegenden Erfindung, die Verwendbarkeit einer Transportbox zu verbessern und insbesondere flexibler auszugestalten. Diese Aufgabe wird durch ein Transportboxsystem mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Das erfindungsgemäße Transportboxsystem umfasst wenigstens eine Transportbox. Die Transportbox dient insbesondere zum Transport für teilzubereitete Speisen und Lebensmittel. Das Transportboxsystem umfasst wenigstens einen Transportboxeinsatz. Die Transportbox umfasst wenigstens einen durch Seitenwandungen und wenigstens einen Boden begrenzten und durch wenigstens einen Deckel verschließbaren Aufnahmeraum. Der Transportboxeinsatz ist in den Aufnahmeraum einsetzbar. Dabei ist der Transportboxeinsatz zum Positionieren von Geschirreinheiten und insbesondere von Tellern ausgebildet. Der Transportboxeinsatz umfasst wenigstens zwei Halteelemente. Die Halteelemente weisen jeweils wenigstens einen Aufnahmeabschnitt mit Aufnahmevertiefungen für wenigstens einen Randabschnitt der Geschirreinheiten auf. Die Halteelemente weisen jeweils wenigstens einen Einsatzabschnitt zum Anordnen an wenigstens einer Seitenwandung des Aufnahmeraums auf.

Das erfindungsgemäße Transportboxsystem bietet viele Vorteile. Einen erheblichen Vorteil bietet der beispielsweise als Tellerhalter ausgebildete Transportboxeinsatz. Dadurch wird die Verwendbarkeit der Transportbox erheblich verbessert und flexibler ausgestaltet. Mit dem erfindungsgemäßen Transportboxsystem ist der Rücktransport von benutzten Tellern erheblich unaufwendiger. Zudem können auch Mehrwegteller bzw. hochwertige Teller sicher und einfach in der Transportbox wieder zum Ausgangsort zurückgeführt werden. Besonders vorteilhaft sind auch die zwei Halteelemente. Der Aufnahmeabschnitt ermöglicht eine sichere Aufnahme der Teller und der Einsatzabschnitt bietet eine zuverlässige Fixierung im Aufnahmeraum. Durch die zweiteilige Ausführung können die Halteelemente zudem ohne großen Verlust an Transportraum zusammen mit den angerichteten Tellern zum Zielort gebracht werden.

Insbesondere sind die Geschirreinheiten zwischen den beiden Halteelementen aufnehmbar. Insbesondere liegen die Halteelemente mit ihren Einsatzabschnitten an zwei gegenüberliegenden Seitenwandungen des Aufnahmeraums an, wenn zwischen ihnen Geschirreinheiten aufgenommen sind. Insbesondere sind die Geschirreinheiten nur zum Teil und vorzugsweise mit wenigstens einem Randabschnitt in den Aufnahmeabschnitt einsetzbar. Das hat den Vorteil, dass auch mit kompakt ausgestalteten Halteelementen größere Geschirreinheiten und beispielsweise Teller oder Platten gehalten und transportiert werden können.

Der Transportboxeinsatz ist insbesondere zum Transport in den Aufnahmeraum einsetzbar. Insbesondere ist der Aufnahmeraum durch den Deckel verschließbar, wenn der Transportboxeinsatz im Aufnahmeraum angeordnet ist. Das gilt vorzugsweise sowohl für den unbeladenen als auch für den beladenen Zustand des Transportboxeinsatzes.

Außerdem ist der Transportboxeinsatz dazu geeignet und ausgebildet, die Geschirreinheiten aufrecht bzw. hochkant im Aufnahmeraum zu positionieren. Das hat den Vorteil, dass der Transportboxeinsatz nicht versehentlich zum Transportieren von angerichteten bzw. mit Essensresten belegten Tellern eingesetzt wird. Insbesondere ist der Transportboxeinsatz für unbeladene undloder benutzte Geschirreinheiten ausgebildet. Der Transportboxeinsatz ist insbesondere nicht für angerichtete Geschirreinheiten vorgesehen. Insbesondere sind die Aufnahmevertiefungen so zueinander beabstandet, dass nur unbeladene Geschirreinheiten aufnehmbar sind.

Bei einer bestimmungsgemäßen Anordnung der Einsatzabschnitte an den Seitenwandungen des Aufnahmeraums sind die Aufnahmeabschnitte vorzugsweise so angeordnet, dass nur eine aufrechte bzw. hochkantige Positionierung der Geschirreinheiten möglich ist. Insbesondere sind die Einsatzabschnitte und die Seitenwandungen so ausgestaltet, dass eine andere als die bestimmungsgemäße Positionierung des Transportboxeinsatzes im Aufnahmeraum formschlüssig unterbunden wird. Insbesondere ist eine nicht aufrechte bzw. nicht hochkantige Anordnung der Geschirreinheiten formschlüssig unterbunden.

Vorzugsweise sind die Aufnahmevertiefungen schlitzartig ausgebildet. Das bietet eine besonders vorteilhafte Aufnahme für Teller oder Platten oder dergleichen. Vorzugsweise umfassen die Aufnahmevertiefungen jeweils wenigstens einen Schlitz. Insbesondere ist ein kammartiger Aufnahmeabschnitt vorgesehen. Die Aufnahmevertiefungen können als Nuten ausgebildet sein oder jeweils wenigstens eine solche umfassen. In einem bestimmungsgemäß beladenen Zustand innerhalb des Aufnahmeraums sind die schlitzartigen Aufnahmevertiefungen insbesondere vertikal ausgerichtet. Die schlitzartigen Aufnahmevertiefungen weisen vorzugsweise jeweils eine Tiefe auf, welche weniger als ein Drittel und vorzugsweise weniger als ein Viertel einer Breite undloder eines Durchmessers einer Geschirreinheit entspricht.

In einer vorteilhaften Ausgestaltung sind die Aufnahmeabschnitte außerhalb der Aufnahmevertiefungen eben ausgebildet. Dadurch sind die unbeladenen Halteelemente zum Transport insbesondere aufeinanderlegbar. Das hat den Vorteil, dass der Transportboxeinsatz platzsparend zusammen mit den angerichteten Tellern in die Transportbox gelegt werden kann, um zum Zielort transportiert zu werden.

Vorzugsweise weisen die Halteelemente jeweils wenigstens sechs Aufnahmevertiefungen auf. Das ist besonders vorteilhaft für den Rücktransport von benutzten Tellern, welche zuvor mit hochwertigen Speisen beladen in der Transportbox transportiert wurden. Möglich ist auch, dass die Halteelemente jeweils wenigstens vier oder wenigstens fünf oder wenigstens sieben oder wenigstens acht Aufnahmevertiefungen aufweisen. Möglich sind auch mehr oder weniger Aufnahmevertiefungen.

Es ist möglich, dass wenigstens eine Seitenwandung des Aufnahmeraums wenigstens eine Aussparung aufweist. Vorzugsweise folgt die Aussparung wenigstens abschnittsweise einer Kontur des Einsatzabschnittes eines Halteelements. Insbesondere ist der Einsatzabschnitt passgenau in die Aussparung einsetzbar. Insbesondere sind an zwei gegenüberliegenden Seitenwandungen solche Aussparungen vorgesehen. Insbesondere ist an gegenüberliegenden Seitenwänden jeweils wenigstens eine Aussparung, sodass die Halteelemente mit aufgenommenen Geschirreinheiten mit ihrem jeweiligen Einsatzabschnitt in die Aussparungen einsetzbar sind. Dadurch wird eine besonders zuverlässige und sichere Fixierung der Geschirreinheiten während des Transports erreicht. Insbesondere wird die Aussparung durch eine Griffmulde bereitgestellt. Es ist möglich, dass die Aussparung der Transportbox als eine Griffmulde ausgebildet ist oder wenigstens eine solche umfasst.

Besonders bevorzugt gibt die Aussparung wenigstens eine definierte Transportposition für den mit Geschirreinheiten beladenen Transportboxeinsatz im Aufnahmeraum vor. So kann gewährleistet werden, dass auch ungeübte Benutzer die Geschirreinheiten für den Rücktransport komfortabel und richtig verstauen können. Insbesondere wird durch die Aussparung und den Einsatzabschnitt insbesondere bei aufgenommenen Geschirreinheiten eine andere als die definierte Transportposition formschlüssig blockiert.

Vorzugsweise weist wenigstens eines der Halteelemente wenigstens eine Griffmulde auf. Insbesondere ist die Griffmulde an einem Einsatzabschnitt angeordnet. Vorzugsweise weisen die Halteelemente jeweils wenigstens eine Griffmulde auf. Möglich ist auch, dass die Halteelemente jeweils wenigstens zwei Griffmulden aufweisen. Das hat den Vorteil, dass immer eine Griffmulde erreichbar ist, auch wenn die Halteelemente gedreht bzw. gewendet werden müssen, um bestimmungsgemäß positioniert zu werden. Möglich ist auch, dass die Griffmulde an dem Aufnahmeabschnitt undloder an einem anderen Abschnitt des Halteelements angeordnet ist. Die Griffmulde ist insbesondere als eine Vertiefung undloder Erhebung ausgebildet.

Insbesondere sind der Transportboxeinsatz und die Transportbox aus wenigstens einem gleichen Werkstoff und vorzugsweise aus einem Partikelschaumstoff gefertigt. Beispielsweise ist Expandiertes Polypropylen (EPP) als Werkstoff vorgesehen. Insbesondere sind das Unterteil undloder der Deckel undloder die Halteelemente aus einem solchen Werkstoff gefertigt. Die Transportbox kann auch Teile aus anderen Werkstoffen aufweisen. Insbesondere ist ein Werkstoff mit Isoliereigenschaften vorgesehen.

Insbesondere sind die Halteelemente gleichartig und vorzugsweise identisch ausgebildet. Das bietet einen besonders flexiblen Einsatz und bietet eine wirtschaftliche Fertigung. Insbesondere sind die Konturen der Einsatzabschnitte der Halteelemente gleichartig und vorzugsweise identisch ausgebildet.

Insbesondere ist die Transportbox als eine Kühlbox undloder isolierte Box ausgebildet. Insbesondere ist die Transportbox für einen Kühltransport von Speisen und Lebensmitteln ausgebildet.

Der erfindungsgemäße Transportboxeinsatz ist für das zuvor beschriebene Transportboxsystem geeignet und ausgebildet. Der Transportboxeinsatz ist zum Positionieren von Geschirreinheiten und insbesondere von Tellern ausgebildet. Der Transportboxeinsatz umfasst wenigstens zwei Halteelemente. Die Halteelemente weisen jeweils wenigstens einen Aufnahmeabschnitt mit Aufnahmevertiefungen für wenigstens einen Randabschnitt der Geschirreinheiten auf. Die Halteelemente weisen jeweils wenigstens einen Einsatzabschnitt zum Anordnen an wenigstens einer Seitenwandung eines Aufnahmeraums einer Transportbox auf.

Weitere Vorteile und Merkmale der vorliegenden Erfindung ergeben sich aus den Ausführungsbeispielen, welche im Folgenden mit Bezug auf die beiliegenden Figuren erläutert werden.

Es zeigen:
- Figur 1: eine rein schematische Darstellung einer erfindungsgemäßen Transportbox in einer perspektivischen Ansicht von schräg oben;
- Figur 2: die Transportbox mit einem abgenommenen Deckel;
- Figur 3: die Transportbox mit abgenommenem Deckel in einer Draufsicht;
- Figur 4: der Deckel in einer perspektivischen Ansicht von schräg oben;
- Figur 5: die Unterseite des Deckels in einer perspektivischen Ansicht von schräg oben;
- Figur 6: ein Deckel für einen Kühlmittelraum des Deckels;
- Figur 7: eine teilweise transparente Darstellung der Transportbox in einer ersten Deckelstellung in einer Draufsicht;
- Figur 8: eine teilweise transparente Darstellung der Transportbox in einer zweiten Deckelstellung in einer Draufsicht;
- Figur 9: eine rein schematische Darstellung eines Halteelements eines erfindungsgemäßen Transportboxsystems in einer perspektivischen Ansicht;
- Figur 10: eine rein schematische Darstellung eines erfindungsgemäßen Transportboxsystems in einer Draufsicht; und
- Figur 11: eine teilweise transparente Darstellung des erfindungsgemäßen Transportboxsystems in einer perspektivischen Ansicht.

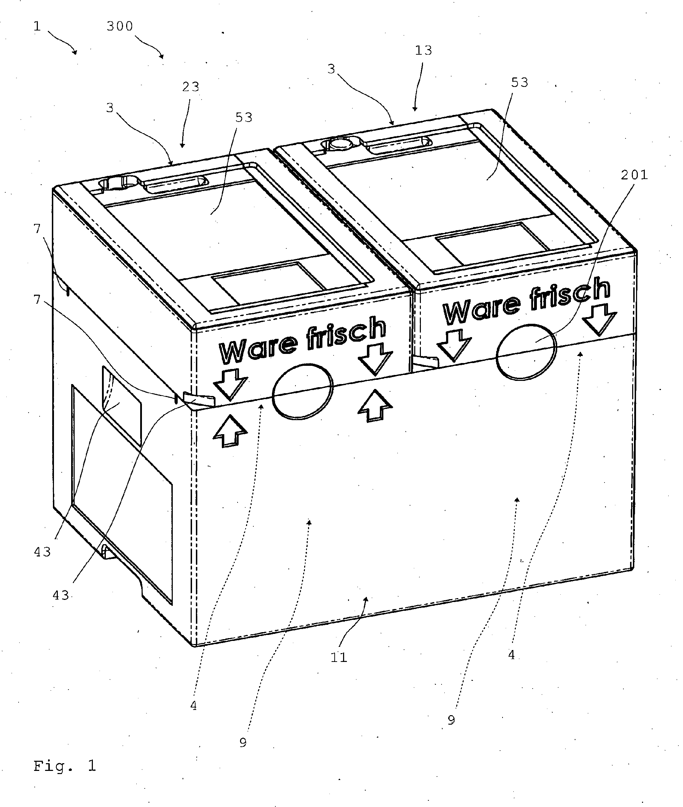

Die Figur 1 zeigt eine Transportbox 1 eines erfindungsgemäßen Transportboxsystems 300. Die Transportbox 1 umfasst ein Unterteil 11 und einen auf dem Unterteil 11 angeordnetem Deckel 3. Das Unterteil 11 stellt hier zwei Aufnahmeräume 2 bereit. Dabei ist jeder Aufnahmeraum 2 durch einen separaten Deckel 3 verschließbar. Die beiden Aufnahmeräume 2 dienen jeweils zur Aufnahme von Geschirreinheiten 110 mit darauf befindlichen Speisen und Lebensmitteln (nicht dargestellt), die sich insbesondere in einer ebenfalls nicht dargestellten Umverpackung befinden. In diesem Gebrauchszustand sind die Geschirreinheiten 110 mit den darauf befindlichen Speisen und Lebensmitteln in der Umverpackung und auch im jeweiligen Aufnahmeraum waagerecht angeordnet.

Das Unterteil 11 weist Seitenwandungen 12 und einen Boden 22 auf, welche die Aufnahmeräume 2 begrenzen. Zwischen den Aufnahmeräumen 2 ist eine von beiden Aufnahmeräumen 2 gemeinsam genutzte Seitenwandung 8 angeordnet.

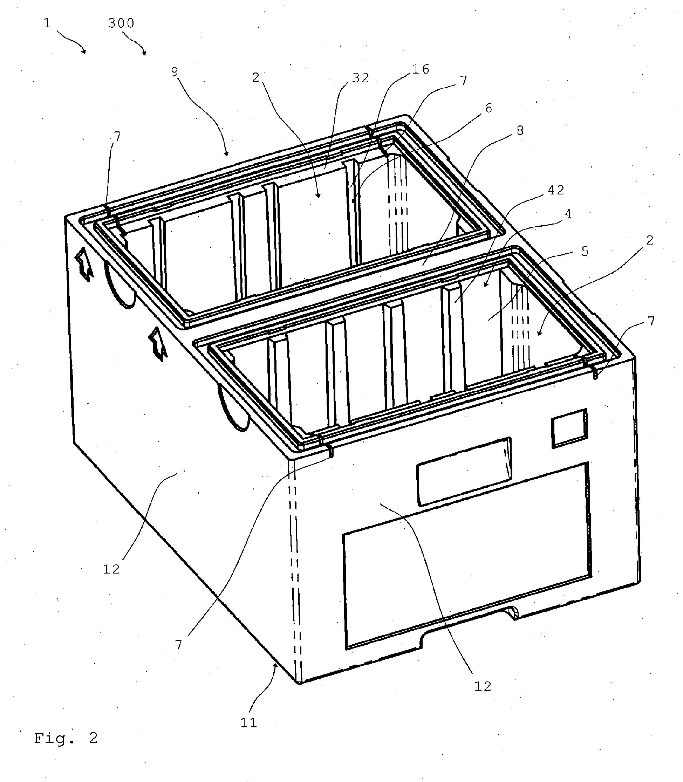

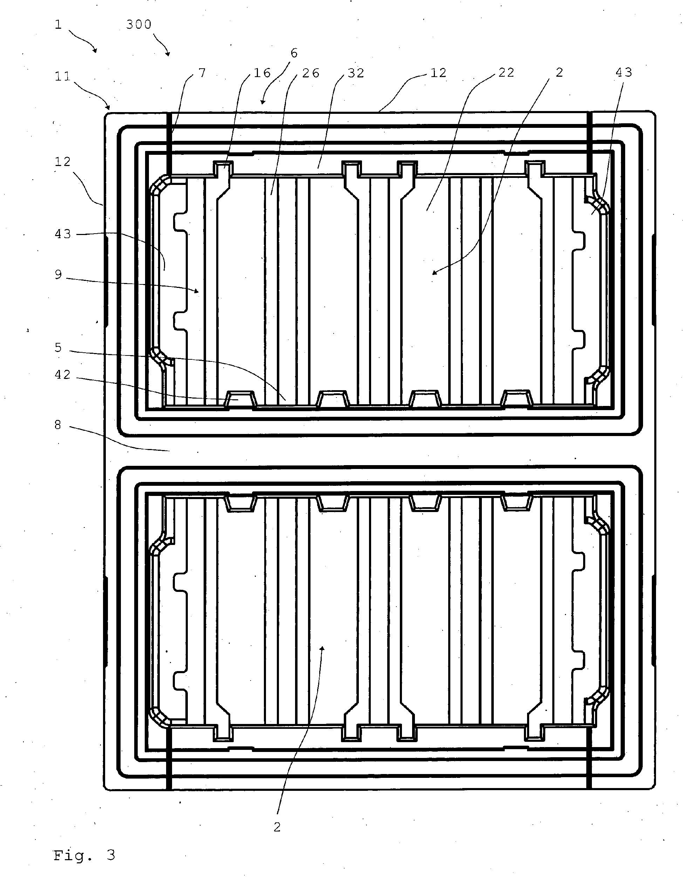

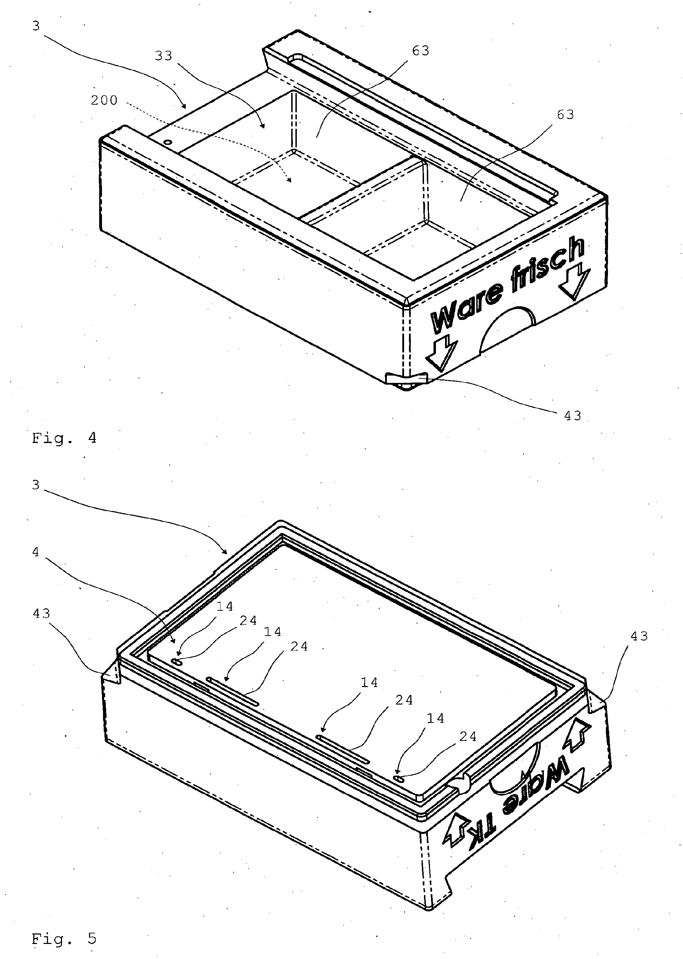

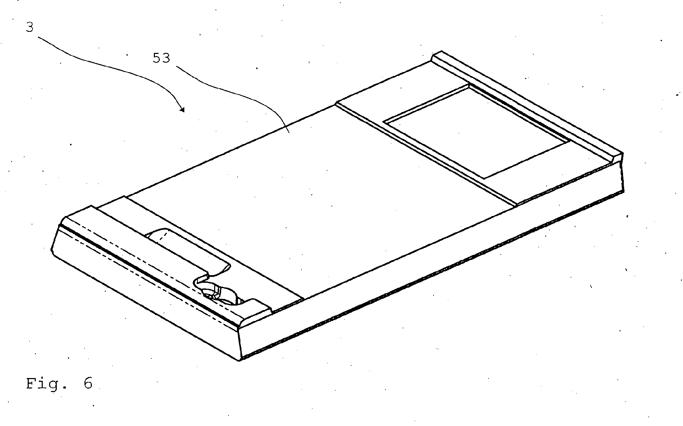

Im Folgenden wird die Transportbox 1 nun mit Bezug zu den Figuren 1 bis 8 näher beschrieben. Das Unterteil 11 wird in den Figuren 2 und 3 näher gezeigt. Darstellungen des Deckels 3 sind in den Figuren 4 bis 6 zu finden.

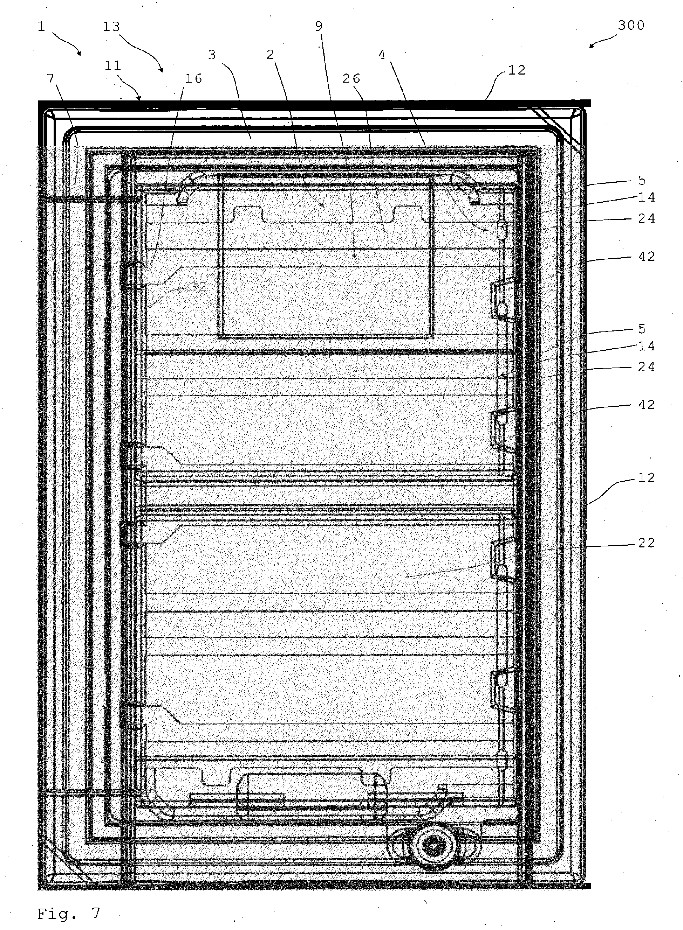

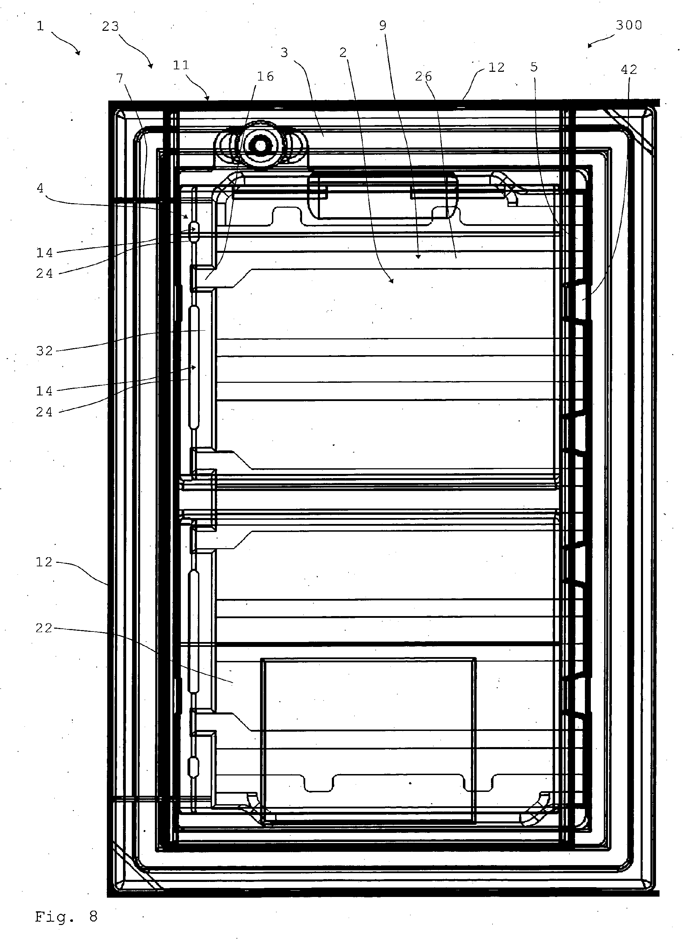

Die Deckel 3 können hier in zwei unterschiedlichen Deckelstellungen 13, 23 auf das Unterteil 11 aufgesetzt werden. Die Deckelstellungen sind den Figuren 7 und 8 näher gezeigt.

Im Deckel 3 befindet sich ein Kühlmittelraum 33 zur Aufnahme eines hier nicht näher dargestellten Kühlmittels 200, beispielsweise Trockeneis bzw. gefrorenes Kohlendioxid. Insbesondere werden 16 mm Trockeneis-Pellets eingesetzt. Wenn das Trockeneis sublimiert, kann das gasförmige Kohlendioxid über eine nachfolgend näher beschriebene Strömungsverbindung 4 in den Aufnahmeraum 2 eintreten. Im Aufnahmeraum 2 wird das Kühlmittel 200 mittels einer Kanaleinrichtung 9 gezielt geführt, um eine für die gewünschte Temperierung optimale Wärmeströmung zu erreichen.

Der Kühlmittelraum 33 umfasst hier zwei Kühlmittelbereiche 63, zwischen denen sich eine Trennwand erstreckt. Zum Verschließen des Kühlmittelraums 33 ist ein Deckel 53 vorgesehen, welcher hier als ein Einschubdeckel ausgebildet ist. Zum Verschließen wird der Deckel 53 in seitliche Nuten des Deckels 3 eingeschoben. Vorzugsweise wird der Deckel 53 zusätzlich verriegelt, sodass ein unbeabsichtigtes Öffnen des Kühlmittelraums 33 verhindert wird.

Zwischen den Deckeln 3 und den Aufnahmeräumen 2 ist hier jeweils eine öffenbare bzw. verschließbare Strömungsverbindung 4 vorgesehen. Über die Strömungsverbindung 4 kann das in die Gasphase übergegangene Trockeneis den Kühlmittelraum 33 verlassen und in den Aufnahmeraum 2 eintreten. Die Strömungsverbindungen 4 werden hier durch Durchgangsöffnungen 14 bereitgestellt. Bei den hier gezeigten Deckeln 3 sind jeweils vier als Langlöcher 24 ausgebildete Durchgangsöffnungen 14 vorgesehen. Dabei sind für jeden Deckel 3 jeweils zwei längere Langlöcher 24 und jeweils zwei kürzere Langlöcher 24 vorgesehen.

Je nach Deckelstellung 13, 23 können die Aufnahmeräume 2 durch das im Deckel 3 aufgenommene Kühlmittel 200 unterschiedlich temperiert werden.

In der ersten Deckelstellung 13 ist die Strömungsverbindung 4 freigegeben, sodass das Kühlmittel 200 in den Aufnahmeraum 2 einströmen kann. Dazu umfassen die Aufnahmeräume 2 hier jeweils eine Kanaleinrichtung 9 mit jeweils fünf Einlassnuten 5. Die Einlassnuten 5 sind hier in die gemeinsame Seitenwandung 8 eingearbeitet. Die Langlöcher 24 sind in der ersten Deckelstellung 13 überlappend zu den Einlassnuten 5 angeordnet. Die überlappende Anordnung ist in der Figur 7 besonders gut zu erkennen. Es kann vorgesehen sein, dass eine Einlassnut 5 nicht mit den Langlöchern 24 überlappt.

Für die zweite Deckelstellung 23 wird der Deckel 3 aus der ersten Deckelstellung 13 um 180° gedreht. In dieser Deckelstellung 23 überlappen die Langlöcher 24 nicht mehr mit den Einlassnuten 5 und die Strömungsverbindung 4 ist verschlossen. Diese Anordnung ist in der Figur 8 besonders gut zu erkennen.

In der Seitenwandung 12, welche der Seitenwandung 8 mit den Einlassnuten 5 gegenüberliegt, sind hier Seitenwandungsabschnitte 32 vorgesehen. In der zweiten Deckelstellung 23 liegen die Langlöcher 24 über den Seitenwandungsabschnitten 32 und sind durch diese verschlossen.

Damit sich das in die Einlassnuten 5 eingeströmte Kühlmittel 200 im Aufnahmeraum 2 besonders gleichmäßig und gezielt verteilen kann, sind weitere Nuten 6 vorgesehen. Als weitere Nuten 6 sind hier im Boden 22 angeordnete Bodennuten 26 vorgesehen. Zudem sind in die Seitenwandung 12, welche den Einlassnuten 5 gegenüberliegt, als Auslassnuten 16 ausgebildete Nuten 6 eingearbeitet. So kann das Kühlmittel 200 bzw. die kalte Luft durch die Einlassnuten 5 nach unten strömen und von dort über den Boden 22 zur gegenüberliegenden Seitenwandung 12. Von dort steigt das Kühlmittel 200 bzw. die kalte Luft wieder nach oben auf und kann über Auslassöffnungen 7 in die Umgebung der Transportbox 1 austreten. Durch die hier gezeigten Nuten 5, 6 wird eine besonders vorteilhafte Führung des Kühlmittels 200 bzw. der kalten Luft erreicht.

Für jeden Aufnahmeraum 2 sind hier jeweils zwei Auslassöffnungen 7 vorgesehen. Die Auslassöffnungen 7 sind hier in dem Unterteil 11 angeordnet. Beispielsweise sind die Auslassöffnungen 7 als schlitzartige Vertiefungen an einer Oberseite derjenigen Seitenwandung 12 angeordnet, in welcher auch die Auslassnuten angeordnet sind. So kann das Kühlmittel 200 zwischen Unterteil 11 und Deckel 3 austreten.

Mit der hier gezeigten Transportbox 1 wird der Aufnahmeraum 2 in der ersten Deckelstellung 13 mittels des Kühlmittels 200 auf eine Tiefkühltemperatur von kleiner minus 12° und beispielsweise auf minus 18° oder weniger temperiert. Dazu werden im Deckel 3 beispielsweise 2 kg oder 3 kg Trockeneis eingesetzt, je nach Außentemperaturen.

Durch die hier gezeigte Ausgestaltung und Anordnung der Einlassnuten 5 und der weiteren Nuten 6 kann die Tiefkühltemperatur mit einer solchen Menge Trockeneis zuverlässig eingestellt werden. Beispielsweise ist so eine Temperierung des Aufnahmeraums 2 über wenigstens 12 Stunden oder sogar über 24 Stunden oder mehr möglich.

Um die transportierten Lebensmittel besonders gut mit dem Kühlmittel 200 bzw. mit kalter Luft umspülen zu können und die Tiefkühltemperatur zuverlässig einzuhalten, sind die Einlassnuten 5 und die weiteren Nuten 6 hier gezielt aufeinander abgestimmt. Beispielsweise weisen die weiteren Nuten 6 eine Tiefe von 10 mm und eine Breite von 10 mm auf. Das hat sich für eine optimale Konvektion als besonders vorteilhaft ausgestellt.

Zudem sind die Einlassnuten 5 hier entsprechend breit ausgebildet. Beispielsweise weisen die Einlassnuten 5 eine Breite von mehr als 40 mm auf. Zudem sind die Einlassnuten 5 hier breiter als die zwischen ihnen liegenden Wandabschnitte 42 ausgebildet. So wird eine besonders gute Konvektion erreicht. Zudem halten die Wandabschnitte 42 das Transportgut auf Abstand, sodass die Strömungswege nicht versperrt werden. Das ist besonders vorteilhaft, wenn die Lebensmittel in quaderförmigen bzw. würfelförmigen Umverpackungen transportiert werden.

Durch das hier gezeigte Verschließen der Strömungsverbindung 4 wird in der zweiten Deckelstellung 23 der Aufnahmeraum 2 mittels des Kühlmittels 200 auf eine Frischhaltetemperatur zwischen 0 °C und 10 °C und beispielsweise auf 8 °C temperiert. Durch das Verschließen der Langlöcher 24 mit den jeweiligen Seitenwandungsabschnitten 32 gelangt kein Kühlmittel 200 mehr in den Aufnahmeraum 2. Die Temperierung erfolgt in der zweiten Deckelstellung 23 somit nicht mehr durch Konvektion bzw. Wärmeströmung, sondern nur noch durch Wärmestrahlung und Wärmeleitung.

Durch die zwei Aufnahmeräume 2 in der Transportbox 1 ergeben sich somit vier Möglichkeiten zur Temperierung. Es können beide Aufnahmeräume 2 auf Frischhaltetemperatur oder beide Aufnahmeräume 2 auf Tiefkühltemperatur eingestellt werden. Oder der linke Aufnahmeraum 2 ist auf Frischhaltetemperatur und der rechte Aufnahmeraum 2 auf Tiefkühltemperatur eingestellt oder umgekehrt.

Zum zuverlässigen Einhalten der Frischhaltetemperatur sind die Deckel 3 hier jeweils mit einem Boden mit einer Stärke von 15 mm ausgestattet. Dadurch kann die Frischhaltetemperatur mit der oben beschriebenen Menge an Trockeneis zuverlässig über wenigstens 12 Stunden oder auch bis zu 24 Stunden oder mehr sicher eingehalten werden.

Ein besonderer Vorteil der hier vorgestellten Transportbox 1 ist, dass die beiden Aufnahmeräume 2 einfach und unaufwendig unterschiedlich temperiert werden können. Beispielsweise wird ein Deckel 3 in der ersten Deckelstellung 13 aufgesetzt, sodass die Tiefkühltemperatur eingestellt ist. Wird der andere Deckel 3 in der zweiten Deckelstellung 23 aufgesetzt, ist der andere Aufnahmeraum 2 auf die Frischhaltetemperatur eingestellt. So können mit der Transportbox 1 sowohl tiefgekühlte Lebensmittel als auch frostempfindliche Lebensmittel transportiert werden. Um einem Wärmeübergang zwischen den Aufnahmeräumen 2 zu vermeiden, ist die gemeinsame Seitenwandung 8 hier wenigstens 70 mm und beispielsweise 74 mm stark.

Um das Abnehmen der Deckel 3 zu erleichtern, sind hier Griffmulden 43 vorgesehen. Dazu sind hier an zwei gegenüberliegenden Ecken des Deckels 3 Aussparungen angeordnet. Dadurch können die Finger besonders gut in die Griffmulde 43 eingelegt werden, um den Deckel 3 vom Unterteil 11 abzuheben.

Um das Tragen der Transportbox 1 zu erleichtern, ist das Unterteil 11 mit zwei gegenüberliegenden Griffmulden 43 ausgestattet. Auch im Inneren der Aufnahmeräume 2 sind Griffmulden 43 vorgesehen. So können quaderförmige bzw. würfelförmige Umverpackungen und z. B. Boxen besonders gut aus dem Aufnahmeraum 2 entnommen werden. Die Griffmulden 43 im Aufnahmeraum 2 sind hier an denjenigen Seitenwandungen 12 angeordnet, welche keine Nuten 5, 6 aufweisen.

Wie in den Figuren 1 und 5 zu erkennen, sind die Deckel 3 an jeweils einer Seite mit der Aufschrift "Ware frisch" und an einer gegenüberliegenden Seite mit der Aufschrift "Ware TK" gekennzeichnet. Zudem sind unter den Schriftzügen jeweils zwei Blockpfeile vorgesehen. Wie in der Figur 1 zu erkennen, ist auch das Unterteil 11 der Transportbox 1 mit Blockpfeilen gekennzeichnet. Dabei sind die Schriftzüge auf dem Deckel 3 so angeordnet, dass sie die Deckelstellung 13, 23 beschreiben, wenn die Blockpfeile von Deckel 3 und Unterteil 11 in Übereinstimmung gebracht sind. So einfach und zuverlässig erkannt werden, ob der Deckel 3 in der ersten Deckelstellung 13 ("Ware TK") oder in der zweiten Deckelstellung 23 zum Frischhalten ("Ware frisch") positioniert ist.

Um eine Unversehrtheit der Waren garantieren zu können und ein nachträgliches Verändern der Deckelstellungen 13, 23 zu verhindern, sind die Deckel 3 und das Unterteil 11 hier mit einer vertieften Siegelfläche 201 ausgestattet. In dem hier gezeigten Beispiel ergänzen sich die Siegelflächen 201 von Deckel 3 und Unterteil 11 zu einem Kreis, auf den dann zum Beispiel ein entsprechend kreisförmiges Siegel aufgeklebt werden kann. Ein Öffnen bzw. Verdrehen des Deckels 3 führt dann automatisch zu einer Verletzung des Siegels.

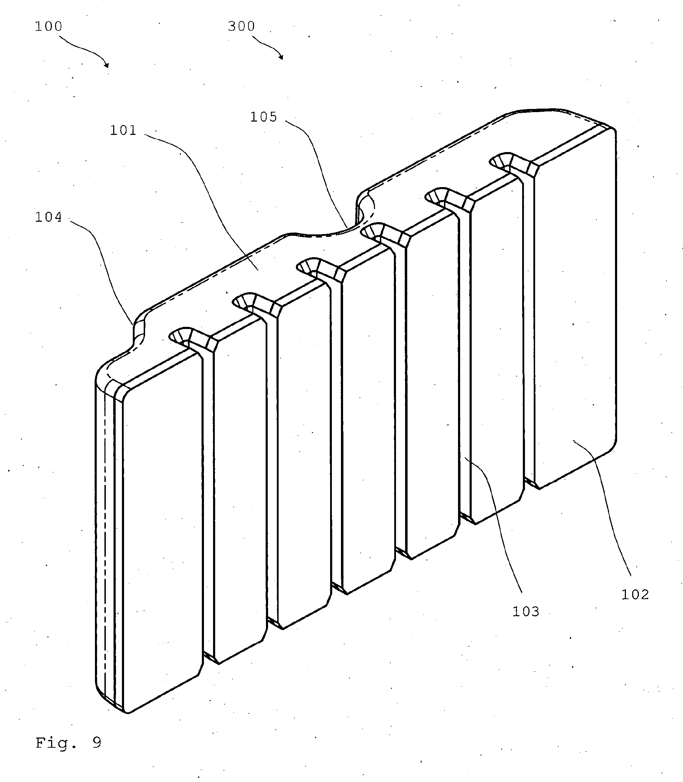

Die Figur 9 zeigt ein Halteelement 101 eines Transportboxeinsatzes 100 des erfindungsgemäßen Transportboxsystems 300. Das Halteelement 101 ist hier zum Positionieren von als Teller ausgebildeten Geschirreinheiten 110 vorgesehen. Der Transportboxeinsatz 101 umfasst ein hier nicht dargestelltes weiteres und vorzugsweise identisches Halteelement 101.

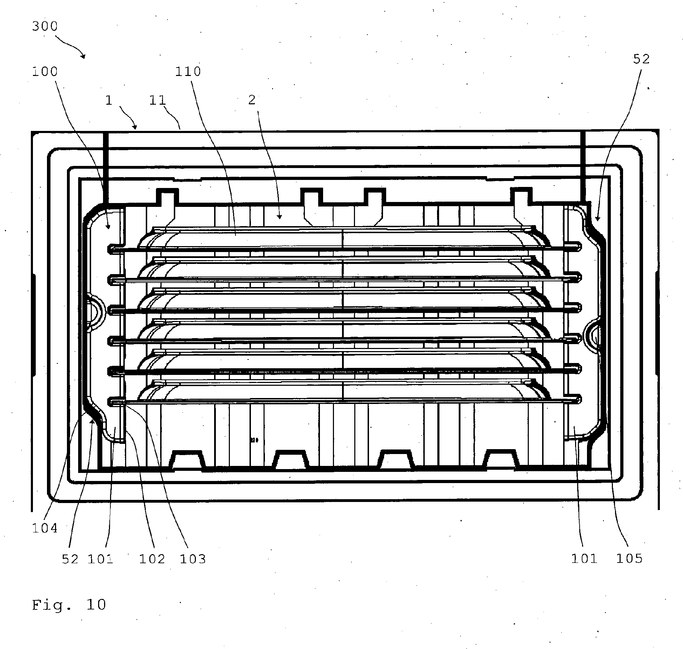

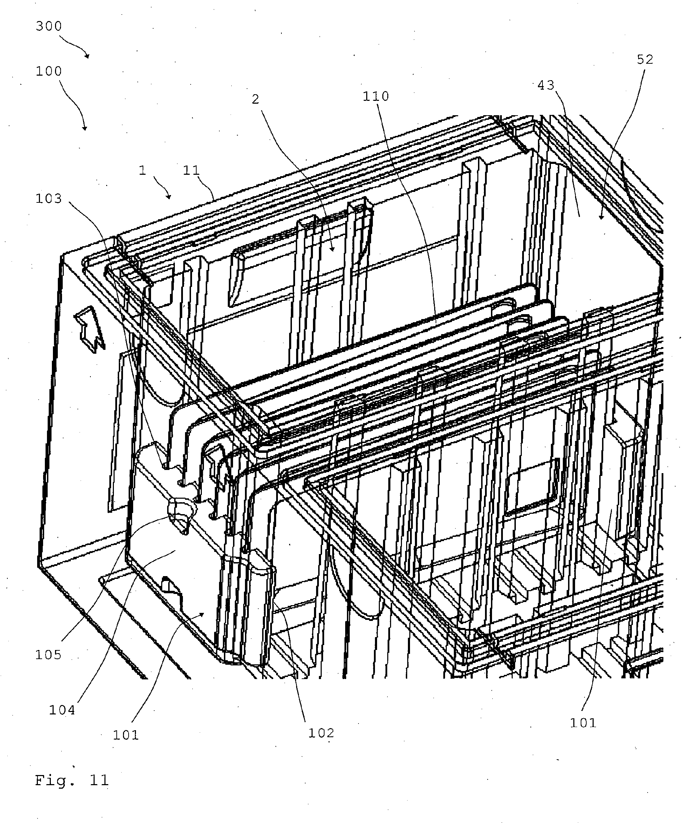

In den Figuren 10 und 11 ist der Transportboxeinsatz 100 mit zwei Halteelementen 101 in einem bestimmungsgemäß beladenen und in einem Aufnahmeraum 2 der Transportbox angeordneten Zustand gezeigt.

Der Transportboxeinsatz 100 wird nun mit Bezug zu den Figuren 9 bis 11 näher beschrieben.

Die Halteelemente 101 weisen jeweils einen Aufnahmeabschnitt 102 und einen Einsatzabschnitt 104 auf. Die Aufnahmeabschnitte 102 weisen jeweils eine gleiche Anzahl von Aufnahmevertiefungen 103 auf. In dem hier gezeigten Beispiel sind sechs Aufnahmevertiefungen 103 vorgesehen. Dabei sind die Aufnahmevertiefungen 103 schlitzartig bzw. als Schlitze ausgebildet. Die Tiefe der Aufnahmevertiefungen 103 ist hier so gewählt, dass die Teller nur mit einem Randabschnitt in die Aufnahmevertiefung 103 eingesteckt werden.

Die Einsatzabschnitte 104 sind hier an jeweils eine Aussparung 52 des Aufnahmeraums 2 angepasst. Die Aussparungen 52 liegen hier an gegenüberliegenden Seitenwandungen 12 des Aufnahmeraums 2. Dabei sind die Aussparungen 52 und die Einsatzabschnitte 104 so aufeinander abgestimmt, dass eine definierte Transportposition für die Teller vorgegeben ist. Dabei folgt die Aussparung 52 der Kontur des Einsatzabschnittes 104 und umgekehrt. Die Aussparung 52 entspricht hier der Griffmulde 43.

In dieser Transportposition sind die schlitzartigen Aufnahmevertiefungen 103 aufrecht bzw. vertikal angeordnet. Das hat den Vorteil, dass die Teller nur aufrecht bzw. hochkant in den Transportboxeinsatz 100 eingesetzt werden können. So kann ein Einschieben von Tellern mit Essensresten vermieden werden.

Die Aufnahmeabschnitte 102 sind hier eben ausgebildet, sodass die Halteelemente 101 platzsparend aufeinandergelegt werden können. So kann der Transportboxeinsatz 100 beispielsweise zusammen mit angerichteten und in Umverpackungen aufgenommenen Tellern transportiert werden. Beispielsweise wird der Transportboxeinsatz 100 dann oben auf die Umverpackungen gelegt.

Um den Transportboxeinsatz 100 nach dem Rücktransport der Teller wieder bequem entnehmen zu können, sind die Halteelemente 101 hier jeweils mit zwei Griffmulden 105 ausgestattet. Durch die zwei Griffmulden 105 steht auch bei einem wechselseitigen Einsatz der Halteelemente 101 immer eine nach oben gerichtete Griffmulde 105 zur Verfügung.

### Bezugszeichenliste

- 1: Transportbox
- 2: Aufnahmeraum
- 3: Deckel
- 4: Strömungsverbindung
- 5: Einlassnut
- 6: Nut
- 7: Auslassöffnung
- 8: Seitenwandung
- 9: Kanaleinrichtung
- 11: Unterteil
- 12: Seitenwandung
- 13: Deckelstellung
- 14: Durchgangsöffnung
- 16: Auslassnut
- 22: Boden
- 23: Deckelstellung
- 24: Langloch
- 26: Bodennut
- 32: Seitenwandungsabschnitt
- 33: Kühlmittelraum
- 42: Wandabschnitt
- 43: Griffmulde
- 52: Aussparung
- 53: Deckel
- 63: Kühlmittelbereich
- 100: Transportboxeinsatz
- 101: Halteelement
- 102: Aufnahmeabschnitt
- 103: Aufnahmevertiefung
- 104: Einsatzabschnitt
- 105: Griffmulde
- 110: Geschirreinheit
- 200: Kühlmittel
- 201: Siegelfläche
- 300: Transportboxsystem

## Patentansprüche

1. Transportboxsystem (300) umfassend wenigstens eine Transportbox (1), insbesondere für teilzubereitete Speisen und Lebensmittel, und wenigstens einen Transportboxeinsatz (100), wobei die Transportbox (1) wenigstens einen durch Seitenwandungen (12) und wenigstens einen Boden (22) begrenzten und durch wenigstens einen Deckel (3) verschließbaren Aufnahmeraum (2) umfasst, wobei der Transportboxeinsatz (100) in den Aufnahmeraum (2) einsetzbar ist, zum Positionieren von Geschirreinheiten (110) und insbesondere von Tellern ausgebildet ist und wenigstens zwei Halteelemente (101) umfasst, die jeweils wenigstens einen Aufnahmeabschnitt (102) mit Aufnahmevertiefungen (103) für wenigstens einen Randabschnitt der Geschirreinheiten (110) und jeweils wenigstens einen Einsatzabschnitt (104) zum Anordnen an wenigstens einer Seitenwandung (12) des Aufnahmeraums (2) aufweisen, wobei in dem Aufnahmeraum (2) Geschirreinheiten (110) entweder leer oder mit darauf befindlichen Speisen und Lebensmitteln, die sich insbesondere in einer Umverpackung befinden, gelagert sind, und wobei die Geschirreinheiten mit darauf befindlichen Speisen und Lebensmitteln, die sich insbesondere in einer Umverpackung befinden, waagerecht gelagert sind,
**dadurch gekennzeichnet,**
**dass** die leeren Geschirreinheiten in dem Transportboxeinsatz (100) aufrecht bzw. hochkant im Aufnahmeraum (2) positioniert sind.

2. Transportboxsystem (300) nach dem vorhergehenden Anspruch, **dadurch gekennzeichnet, dass** die Aufnahmevertiefungen (103) schlitzartig ausgebildet sind.

3. Transportboxsystem (300) nach einem der vorhergehenden Ansprüche, **dadurch gekennzeichnet, dass** die Aufnahmeabschnitte (102) außerhalb der Aufnahmevertiefungen (103) eben ausgebildet sind, sodass die unbeladenen Halteelemente (101) zum Transport aufeinanderlegbar sind.

4. Transportboxsystem (300) nach einem der vorhergehenden Ansprüche, **dadurch gekennzeichnet, dass** die Halteelemente (101) jeweils wenigstens sechs Aufnahmevertiefungen (103) aufweisen.

5. Transportboxsystem (300) nach einem der vorhergehenden Ansprüche, **dadurch gekennzeichnet, dass** wenigstens eine Seitenwandung (12) des Aufnahmeraums (2) wenigstens eine Aussparung (52) aufweist und dass die Aussparung (52) wenigstens abschnittsweise der Kontur des Einsatzabschnittes (104) eines Halteelements (101) folgt.

6. Transportboxsystem (300) nach dem vorhergehenden Anspruch, **dadurch gekennzeichnet, dass** die Aussparung (52) wenigstens eine definierte Transportposition für den mit Geschirreinheiten (110) beladenen Transportboxeinsatz (100) im Aufnahmeraum (2) vorgibt.

7. Transportboxsystem (300) nach einem der vorhergehenden Ansprüche, **dadurch gekennzeichnet, dass** wenigstens eines der Halteelemente (101) wenigstens eine Griffmulde (105) aufweist.

8. Transportboxsystem (300) nach einem der vorhergehenden Ansprüche, **dadurch gekennzeichnet, dass** der Transportboxeinsatz (100) und die Transportbox (1) aus einem gleichen Werkstoff und vorzugsweise aus einem Partikelschaumstoff gefertigt sind.

## Claims

1. A transport box system (300) comprising at least one transport box (1), in particular for partially prepared meals and food, and at least one transport box insert (100), wherein the transport box (1) comprises at least one receiving space (2), which is delimited by side walls (12) and at least one base (22) and can be sealed by at least one cover (3), wherein the transport box insert (100) can be inserted into the receiving space (2), is designed for positioning crockery units (110), and in particular plates, and comprises at least two holding elements (101), which each have at least one receiving section (102) with receiving depressions (103) for at least one edge section of the crockery units (110) and each have at least one insert section (104) for arranging on at least one side wall (12) of the receiving space (2), wherein, in the receiving space (2), crockery units (110) are stored either empty or with meals and food located on them, which are in particular located in an outer packaging, and wherein the crockery units with meals and food located on them, which are in particular in an outer packaging, are stored horizontally,
**characterized in**
**that** the empty crockery units in the transport box insert (100) are positioned upright or edgewise in the receiving space (2).

2. The transport box system (300) according to the preceding claim, **characterized in that** the receiving depressions (103) are designed in the manner of slots.

3. The transport box system (300) according to one of the preceding claims, **characterized in that** the receiving sections (102) are designed to be flat outside of the receiving depressions (103) such that the unloaded holding elements (101) can be placed on top of one another for transport.

4. The transport box system (300) according to one of the preceding claims, **characterized in that** the holding elements (101) each have at least six receiving depressions (103).

5. The transport box system (300) according to one of the preceding claims, **characterized in that** at least one side wall (12) of the receiving space (2) has at least one recess (52) and **in that** the recess (52) at least partially follows the contour of the insert section (104) of a holding element (101).

6. The transport box system (300) according to the preceding claim, **characterized in that** the recess (52) predefines at least one defined transport position for the transport box insert (100) loaded with crockery units (110) in the receiving space (2).

7. The transport box system (300) according to one of the preceding claims, **characterized in that** at least one of the holding elements (101) has at least one recessed grip (105).

8. The transport box system (300) according to one of the preceding claims, **characterized in that** the transport box insert (100) and the transport box (1) are made from the same material and preferably from a particle foam.

## Revendications

1. Système de caisse de transport (300) comprenant au moins une caisse de transport (1), en particulier pour les repas partiellement préparés et les denrées alimentaires, et au moins un insert de caisse de transport (100), dans lequel la caisse de transport (1) comprend au moins un espace de réception (2) délimité par des parois latérales (12) et au moins un fond (22) et pouvant être fermé par au moins un couvercle (3), dans lequel l'insert de caisse de transport (100) peut être inséré dans l'espace de réception (2), est réalisé pour le positionnement d'unités de vaisselle (110) et notamment d'assiettes et comprend au moins deux éléments de maintien (101), présentant chacun au moins une section de réception (102) avec des évidements de réception (103) pour au moins une section de bord des unités de vaisselle (110) et chacun au moins une section d'insert (104) pour l'agencement sur au moins une paroi latérale (12) de l'espace de réception (2), dans lequel, dans l'espace de réception (2), des unités de vaisselle (110), soit vides soit avec des repas et des denrées alimentaires dessus, qui se trouvent notamment dans un emballage extérieur, sont placées, et dans lequel les unités de vaisselle avec des repas et des denrées alimentaires dessus, qui se trouvent notamment dans un emballage extérieur, sont placées horizontalement,
**caractérisé,**
**en ce que** les unités de vaisselle vides dans l'insert de boîte de transport (100) sont positionnées debout ou droites dans l'espace de réception (2).

2. Système de caisse de transport (300) selon la revendication précédente, **caractérisé en ce que** les évidements de réception (103) sont réalisés à la manière de fentes.

3. Système de caisse de transport (300) selon l'une des revendications précédentes, **caractérisé en ce que** les sections de réception (102) sont réalisées plates à l'extérieur des évidements de réception (103), de sorte que les éléments de maintien (101) non chargés peuvent être placés les uns sur les autres pour le transport.

4. Système de caisse de transport (300) selon l'une des revendications précédentes, **caractérisé en ce que** les éléments de maintien (101) présentent chacun au moins six évidements de réception (103).

5. Système de caisse de transport (300) selon l'une des revendications précédentes, **caractérisé en ce qu'**au moins une paroi latérale (12) de l'espace de réception (2) présente au moins une encoche (52) et **en ce que** l'encoche (52) suit au moins partiellement le contour de la section d'insert (104) d'un élément de maintien (101).

6. Système de caisse de transport (300) selon la revendication précédente, **caractérisé en ce que** l'encoche (52) spécifie au moins une position de transport définie pour l'insert de caisse de transport (100) chargé d'unités de vaisselle (110) dans l'espace de réception (2).

7. Système de caisse de transport (300) selon l'une des revendications précédentes, **caractérisé en ce qu'**au moins un des éléments de maintien (101) présente au moins une poignée encastrée (105).

8. Système de caisse de transport (300) selon l'une des revendications précédentes, **caractérisé en ce que** l'insert de caisse de transport (100) et la caisse de transport (1) sont fabriqués à partir d'un même matériau et de préférence à partir d'une mousse de particules.
